# EUROPEAN PATENT SPECIFICATION

(11) **EP 0 558 668 B1**
(45) Date of publication and mention of the grant of the patent: **28.01.1998**
(21) Application number: 92902077.4
(22) Date of filing: 20.11.1991
(51) Int. Cl.: G01F 23/22, G01F 23/24

(54) **LEVEL SENSING**
FÜLLSTANDSMESSUNG
DETECTION DE NIVEAU

(30) Priority: 22.11.1990 AU 3464/90
(43) Date of publication of application: 08.09.1993
(73) Proprietor: PYROZONE MANUFACTURING PTY. LTD., Alberton, QLD 4207 (AU)
(72) Inventor: HEGGE, Kjell, Underwood, QLD 4119 (AU)
(74) Representative: Shindler, Nigel
(86) International application number: PCT/AU91/00535
(87) International publication number: WO 92/09867

(56) References cited:
- WO-A-90/08304
- AU-A- 4 962 190
- DD-A- 220 203
- DE-A- 1 698 049
- DE-A- 2 024 911
- DE-A- 2 346 761
- DE-A- 3 408 647
- US-A- 4 404 809
- DERWENT ABSTRACT Accession No. 89-184542/25, Class S02, SU,A, 1427181 (AZERB ENG CONS INST.) 30 September 1988 (30.09.88). (see Abstract).

## Description

### FIELD OF THE INVENTION

THIS INVENTION concerns the detection of levels in fluid media and in particular detection of a fluid level within a container, an interface between gas and liquid within a container or the level of one or more interface between two or more liquids within a container.

### BACKGROUND OF THE INVENTION

As used herein the expression "fluid" means any gas or liquid or any flowable solids such as powdered or particulate solids.

The invention, while being applicable to the situations mentioned above and others, will be described by way of example only with reference to the detection of the level of an interface between a gas and a liquid within a container. In particular, the invention will be described by way of example with reference to the detection of the level of liquid in a container where the liquid in the container is liquified carbon dioxide (CO₂) and when the container has CO₂ gas above the level of the liquid.

Carbon dioxide (CO₂₎ in its gaseous form is used in large quantities in many industries. One of the major consumers of CO₂ is the hotel trade in the provision of draught carbonated beverages and carbonated beverages through a reticulated supply system. Other consumers also often require CO₂ to be supplied in cylinders or tanks.

It has been the practice to provide some means to identify or detect the level of the liquid CO₂ within the cylinder and hence the quantity of liquid remaining in the cylinder. Since, in such situations the cylinder is under high pressure it is not convenient or appropriate to employ sight gauges or the like to provide an indication of liquid level. With such cylinders containing CO₂ in liquid form it has been the practice to provide an electro-mechanical level detecting mechanism employing a probe positioned within the cylinder in which the probe had a plurality of sensors such as reed relays along its length.

Associated with the probe was a float having a magnetic element for actuation of the reed relays. As it is difficult to completely remove moisture from bulk liquefied industrial gases such as propane, butane, natural gas, CO₂, nitrogen and the like, there is a tendency for ice particles to accumulate on the surface of the liquid gas particularly when the liquid is cooled to below freezing by adiabatic expansion.

With mechanical and electromechanical liquid level detectors, it has been found that accumulation of ice particles on the surface of the liquid gas frequently jams mechanical devices such as floats leading to quite unreliable operation of the level detector. In addition, where the storage cylinder was made of steel, fine rust particles have been found to accumulate at the liquid level and adversely affect the level sensing probe. Accordingly, liquid level sensing arrangements of a mechanical or moving nature were unreliable.

Difficulties have also been encountered with prior art liquid level detectors for use in determining the position of an interface between fluids of differing specific gravities. Fermentation and distillation vessels typify situations wherein the positions of one or more liquid/liquid interfaces may be required to be determined for the purpose of controlling continuous processes.

A typical cylinder arrangement for CO₂ is illustrated as part of the schematic view shown in FIG 4 of Australian Patent Application 67304/87. Such cylinders are provided with a heating element within the tank and adjacent the bottom of the tank, a refrigerant evaporator within the tank and at an upper end thereof, a liquid level detection device extending into the cylinder and having an elongate rod and a captive float and take off and inlet lines.

Other fluid level sensing and monitoring means are described in International Patent Application Number PCT/AU85/00265 (Publication Number WO 86/02725), United States Patents 3911744, 2963908, 4203325, Australian Patent Numbers 493224 and 407006, and German Democratic Republic Patent Publication No. 220203.

United States Patent 3911744 and 4203325 are concerned with vertically spaced electrodes which when immersed in a conducting liquid, close an electrical circuit with a laterally spaced reference electrode.

United States Patent Number 2963908 is concerned with the measurement of levels in fluids including flowable particulate solids and utilizes capacitance measurement to detect changes in dielectric constant of a surrounding medium.

Australian Patent Number 493224 described a rod-like electrode structure comprising alternating conducting and insulating sections for liquid level measurement or pump control. The electrode requires for its operation to be immersed in a conducting liquid.

Australian Patent Application Number 407006 described a plurality of spaced thermistors operating at a normal temperature of about 300°C. Immersion of a heated thermistor in a liquid changes its electrical resistivity and consequently the operating characteristics of a transistor operatively connected to the thermistor to switch the transistor between a non-conducting state and a conducting state.

German Democratic Republic Patent Publication No. 220203 is concerned with a level indicator for low boiling-point liquefied gases, which includes level sensors fitted to a fluid container at five different levels. Each level sensor comprises at least two transistors connected in a diode circuit and encapsulated in plastic. One sensor is always immersed in liquid and serves as a reference.

International Patent Application Number PCT/AU85/00265 describes an electrode assembly similar to that described in Australian Patent Number 493224 except that the spaced conducting electrodes are discontinuous about the peripheral surface of the electrode body.

International Patent Application Number PCT/AU90/00017 (Publication Number WO 90/08304) describes an assembly of temperature dependent level sensors and a reference sensor. The level sensors are arranged or embedded within the probe and having a portion of the sensor capable of coming into contact with the liquid gas within the cylinder. The sensors in such an arrangement were prone to damage which was likely to occur during removal and replacement of the probe during construction, servicing or filing of the cylinder. In addition a reference sensor was necessary for the proper operation of the assembly.

In PCT/AU90/00017 the assembly employed transistors as sensors to detect liquid or gas levels within a cylinder by a combination of the temperature and cooling effects of the liquid and gas in question. When considering substances such as CO₂ there may be little temperature difference (if any) between liquid CO₂ and gaseous C₂O. The sensitivity of the sensors disclosed in PCT/AU90/00017 may not be sufficient to accurately detect liquid or gas levels of substances such as CO₂.

Transistors have also been used as level sensors in DD-A-220203.

It is an object of the present invention to provide a fluid level sensor which at least alleviates or minimises some of the disadvantages referred to above.

### DISCLOSURE OF THE INVENTION

According to one aspect of the invention there is provided a level sensing apparatus for sensing the level of a fluid including an elongate housing with a plurality of spaced Darlington pair transistor configurations positioned therein, each one of said Darlington pair transistor configurations being so positioned in the elongate housing and biased with bias components such that the conductivity of each one of the respective said Darlington pair configurations is dependent upon the cooling effects of the fluid, wherein a potential difference, intermediate the potential difference across the circuit comprising the Darlington configuration and the bias components, and which is above a predetermined threshold level is provided across each one of the respective said Darlington pair transistor configurations due to the cooling effects of the fluid when in a liquid form, and a potential difference lower than the predetermined threshold level is provided due to the cooling effects of the fluid when in a gaseous form.

Suitably, said Darlington pair transistor configurations are positioned in said housing such that said Darlington pair transistor configurations are not allowed to contact fluid. Alternatively, said Darlington pair transistor configurations may be suitably positioned in apertures in said housing thereby allowing at least part of each of the Darlington pair transistor configurations to be in contact with the fluid.

Preferably, the bias components include a first resistor in the collector path of each one of said Darlington pair transistor configurations and a second resistor in the emitter path of each one of said Darlington pair transistor configurations.

The bias components may further include a variable resistor connected at the base of each one of said Darlington pair transistor configurations.

Suitably, the collector output of each one of said Darlington pair transistor configurations is coupled to an input of a comparator and a reference voltage is coupled to a second input of the comparator, wherein the comparator has an indicator connected to its output, the indicator providing a signal indicative of the output voltage of the comparator.

Preferably, the reference voltage is approximately 12 VDC.

Suitably, each of the respective said Darlington pair transistor configurations is biased to provide a collector voltage of about 14 VDC due to the cooling effects of the fluid when in a liquid form, and a collector voltage of 9 to 10 VDC due to the cooling effects of the fluid when in a gaseous form.

A particular preferred embodiment of the invention will now be described by way of example with reference to the drawings in which:-
Figure 1 is a circuit diagram of a Darlington pair sensor and associated circuitry according to an embodiment of the invention; and
Figure 2 is a diagrammatic view showing how sensors may be mounted in use.

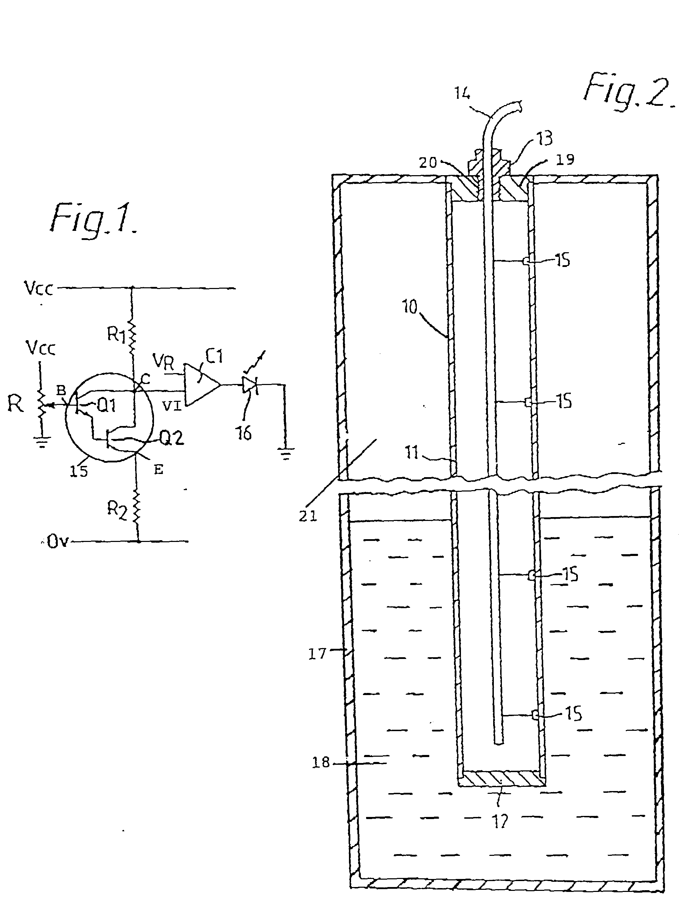

In Figure 1, there is illustrated a Darlington pair sensor 15 comprising cascade connected emitter follower transistors Q1 and Q2 in a Darlington pair configuration package. Resistor R1 is a current limiting resistor in the collector path (of collector electrode C) of sensor 15. Resistor R2 is connected in the emitter path of electrode E of sensor 15 and provides a small amount of negative feedback. Also variable resistor R is connected at the base of electrode B of sensor 15 and sets the base current into sensor 15.

With VCC of 24 VDC resistors R1 and R2 are chosen and R is set such that collector electrode C is typically at a potential of about 14 VDC when sensor 15 is under the influence of temperature and cooling effects of a liquid. When Darlington pair sensor 15 is under the influence of temperature and cooling effects of a gas its conductivity increases such that the collector electrodes are typically at a potential of 9 to 10 VDC. The high gain of Darlington pair sensor 15, the setting of R and the choice of resistors R₁ and R₂ allow for relatively quick and precise switching when the temperature of sensor 15 is affected by the presence of liquid or gas.

Collector electrode C is connected to an input VI of comparator C1. An indicator, such as LED 16 is coupled to the output of comparator C1 which has a positive reference voltage input VR which may typically be coupled to a reference voltage of 12VDC. Accordingly, comparator C1 provides a positive output when sensor 15 is under the influence of gas therefore switching LED 16 "on". When sensor 15 is under the influence of liquid the collector voltage is above 12VDC and therefore comparator C₁ provides a zero voltage output switching LED 16 "off". The magnitude of the reference voltage VR need not be 12 VDC but this value is preferable for collector voltage swings between approximately 14VDC to 9VDC.

As illustrated in Figure 2, a plurality of Darlington pair sensors 15 connected to biasing and indicator circuitry of Figure 1 are arranged at intervals along an elongate housing 10 within a cylinder 17 containing a fluid such as CO₂. Sensors 15 are positioned against the inner surface 11 of housing 10 and are separated from the fluid by housing 10 and do not physically contact the fluid.

Housing 11 is closed off at one end by plug 12 and at its other end by a plug 19 having a threaded aperture 20 receiving a threaded gland 13. A cable 14 passes through gland 13 and achieves electrical connection for each sensor 15 to their associated biasing and indicator circuitry (R₁, R₂, R, C₁ and LED 16).

Each one of sensors 15 is under the influence of liquid 18 or gas 21 depending upon the level of liquid 18 within cylinder 17. The heat generated from the sensors 15, due to currents flowing therethrough, is cooled by the effects of the presence of a fluid in a liquid or a gaseous form. The junction temperature of each Darlington pair sensor 15 will therefore vary depending upon whether or not it is being cooled by a liquid or gas. Accordingly, each LED 16 will be in either "on" or "off" depending upon whether or not its associated sensor 15 is being cooled by a liquid or gas. This provides a means of indicating the level of liquid 18 in cylinder 17 by the cooling effects of the liquid.

## Claims

1. A level sensing apparatus for sensing the level of a fluid including an elongate housing with a plurality of spaced Darlington pair transistor configurations positioned therein, each one of said Darlington pair transistor configurations being so positioned in the elongate housing and biased with bias components such that the conductivity of each one of the respective said Darlington pair configurations is dependent upon the cooling effects of the fluid, wherein a potential difference, intermediate the potential difference across the circuit comprising the Darlington configuration and the bias components, and which is above a predetermined threshold level is provided across each one of the respective said Darlington pair transistor configurations due to the cooling effects of the fluid when in a liquid form, and a potential difference lower than the predetermined threshold level is provided due to the cooling effects of the fluid when in a gaseous form.

2. The apparatus according to claim 1, wherein said Darlington pair transistor configurations are positioned in said housing such that said Darlington pair transistor configurations are not allowed to contact fluid.

3. The apparatus according to any one preceding claim, wherein the bias components include a first resistor in the collector path of each one of said Darlington pair transistor configurations and a second resistor in the emitter path of each one of said Darlington pair transistor configurations.

4. The apparatus according to claim 3, wherein the bias components further include a variable resistor connected at the base of each one of said Darlington pair transistor configurations.

5. The apparatus according to any one preceding claim, wherein the collector output of each one of said Darlington pair transistor configurations is coupled to an input of a comparator and a reference voltage is coupled to a second input of the comparator, wherein the comparator has an indicator connected to its output, the indicator providing a signal indicative of the output voltage of the comparator.

6. The apparatus according to claim 5, wherein the reference voltage is approximately 12 VDC.

7. The apparatus according to any one preceding claim, wherein each of the respective said Darlington pair transistor configurations is biased to provide a collector voltage of about 14 VDC due to the cooling effects of the fluid when in a liquid form, and a collector voltage of 9 to 10 VDC due to the cooling effects of the fluid when in a gaseous form.

## Patentansprüche

1. Füllstandsfühler zur Feststellung des Füllstands eines Strömungsmittels, mit einem länglichen Gehäuse mit mehreren darin angeordneten, getrennten Darlington-Paartransistorkonfigurationen, von denen jede so in dem länglichen Gehäuse angeordnet und durch Vorspannungskomponenten unter Vorspannung gesetzt ist, daß die Leitfähigkeit jedes einzelnen der genannten Darlington-Paarkonfigurationen von der Kühlwirkung des Strömungsmittels abhängt, wobei durch Kühlwirkung des flüssig vorliegenden Strömungsmittels an jeder der genannten Darlington-Paartransistorkonfigurationen eine Potentialdifferenz,die zwischen der Potentialdifferenz zwischen der die Darlington-Konfiguration enthaltenden Schaltung und den Vorspannungskomponenten und oberhalb eines bestimmten Schwellenniveaus liegt, und durch Kühlwirkung des gasförmig vorliegenden Strömungsmittels eine unter dem bestimmten Schwellenniveau liegende Potentialdifferenz geschaffen wird.

2. Vorrichtung nach Anspruch 1, bei der die Darlington-Paartransistorkonfigurationen in dem Gehäuse so angeordnet sind, daß sie mit dem Strömungsmittel nicht in Kontakt kommen können.

3. Vorrichtung nach einem vorhergehenden Anspruch, bei der die Vorspannungskomponenten einen ersten Widerstand in dem Kollektorweg jeder der genannten Darlington-Paartransistorkonfigurationen und einen zweiten Widerstand in dem Emitterweg jeder der genannten Darlington-Paartransistorkonfigurationen umfassen.

4. Vorrichtung nach Anspruch 3, bei der die Vorspannungskomponenten ferner einen variablen Widerstand umfassen, der an die Basis jeder der genannten Darlington-Paartransistorkonfigurationen angeschlossen ist.

5. Vorrichtung nach einem vorhergehenden Anspruch, bei der der Kollektorausgang jedes der genannten Darlington-Paartransistorkonfigurationen mit dem Eingang eines Komparators gekoppelt ist und eine Bezugsspannung an einem zweiten Eingang des Komparators liegt, wobei an den Ausgang des Komparators ein Anzeigegerät angeschlossen ist, das ein die Ausgangsspannung des Komparators anzeigendes Signal liefert.

6. Vorrichtung nach Anspruch 5, bei der die Bezugsspannung etwa 12 Volt Gleichspannung beträgt.

7. Vorrichtung nach einem vorhergehenden Anspruch, bei der jede der genannten Darlington-Paartransistorkonfigurationen unter Vorspannung gesetzt ist, um infolge der Kühlwirkungen des Strömungsmittels in flüssiger Form eine Kollektorspannung von etwa 14 Volt Gleichspannung und infolge der Kühlwirkungen des Strömungsmittels in gasförmiger Form eine Kollektorspannung von 9 bis 10 Volt Gleichspannung zu liefern.

## Revendications

1. Dispositif de détection de niveau destiné à détecter le niveau d'un fluide, comprenant un boîtier allongé avec une pluralité de configurations de transistors Darlington espacées, disposées dans celui-ci, chacune desdites configurations de transistors Darlington étant placée dans le boîtier allongé et polarisée au moyen d'éléments de polarisation de telle façon que la conductivité de chacune desdites configurations en paires Darlington respectives dépend des effets refroidissants du fluide, dans lequel une différence de potentiel, correspondant à une valeur intermédiaire de la différence de potentiel aux bornes du circuit comprenant la configuration de Darlington et les éléments de polarisation, et qui est supérieure à un niveau de seuil prédéterminé, est appliquée aux bornes de chacune desdites configurations de transistors Darlington respectives, due aux effets refroidissants du fluide lorsqu'il se trouve sous la forme liquide, et une différence de potentiel inférieure au niveau de seuil prédéterminé est appliquée, due aux effets refroidissants du fluide lorsqu'il se trouve sous la forme gazeuse.

2. Dispositif selon la revendication 1, dans lequel lesdites configurations de transistors Darlington sont disposées dans ledit boîtier dans des conditions telles que lesdites configurations de transistors Darlington ne peuvent pas venir en contact avec le fluide.

3. Dispositif selon l'une quelconque des revendications qui précèdent, dans lequel les éléments de polarisation comprennent une première résistance dans le parcours collecteur de chacune desdites configurations de transistors Darlington et une deuxième résistance dans le parcours émetteur de chacune desdites configurations de transistors Darlington.

4. Dispositif selon la revendication 3, dans lequel les éléments de polarisation comprennent en outre une résistance variable raccordée à la base de chacune desdites configurations de transistors Darlington.

5. Dispositif selon l'une quelconque des revendications qui précèdent, dans lequel la sortie collecteur de chacune desdites configurations de transistors Darlington est raccordée à l'entrée d'un comparateur et une tension de référence est raccordée à une deuxième entrée du comparateur, dans lequel le comparateur comprend un appareil indicateur raccordé à sa sortie, l'appareil indicateur fournissant un signal représentatif de la tension de sortie du comparateur.

6. Dispositif selon la revendication 5, dans lequel la tension de référence est approximativement de 12V CC.

7. Dispositif selon l'une quelconque des revendications qui précèdent, dans lequel chacune desdites configurations de transistors en paires Darlington est polarisée pour fournir une tension de collecteur d'environ 14V CC due aux effets refroidissants du fluide lorsqu'il se trouve sous la forme liquide, et une tension de collecteur de 9 à 10V CC due aux effets refroidissants du fluide lorsqu'il se trouve sous la forme gazeuse.
